# EUROPEAN PATENT SPECIFICATION

(11) **EP 0 583 416 B1**
(45) Date of publication and mention of the grant of the patent: **24.01.2001**
(21) Application number: 92913851.9
(22) Date of filing: 11.05.1992
(51) Int. Cl.: G11B 11/10, G11B 7/00, G11B 20/14

(54) **OPTICAL DATA STORAGE AND RETRIEVAL SYSTEM AND METHOD**
OPTISCHES DATENSPEICHERUNGSSYSTEM UND ZURÜCKWINNUNGSSYSTEM UND VERFAHREN DAFÜR
PROCEDE ET SYSTEME OPTIQUES DE STOCKAGE ET DE RECHERCHE DE DONNEES

(30) Priority: 10.05.1991 US 698673; 12.09.1991 US 758059
(43) Date of publication of application: 23.02.1994
(60) Divisional application: 97202996.1
(73) Proprietor: DISCOVISION ASSOCIATES, Irvine, CA 92714 (US)
(72) Inventor: KIMURA, Noboru, Torrance, CA 90505 (US); VITULLO, Ronald, G., Laguna Niguel, CA 92667 (US); YAMAZAKI, Yasuhiro, Cypress, CA 90630 (US)
(74) Representative: Kuhnen & Wacker
(86) International application number: US9203925
(87) International publication number: WO9221125

(56) References cited:
- EP-A- 0 064 196
- EP-A- 0 265 849
- EP-A- 0 320 975
- EP-A- 0 388 271
- US-A- 4 811 280
- US-A- 4 928 187
- US-A- 5 099 464
- US-A- 5 101 395
- US-A- 5 109 373

## Description

### Background of the Invention

This invention relates to digital data storage and retrieval and, more particularly, an optical data storage and retrieval system and method.

Recordable/erasable optical disks are currently available for use as data storage media. Magneto-optical recording is the technique commonly used to store the data on and/or retrieve the data from the disk (see for instance EP-A-0 388 271). During recording, a magnetic field orients the polarity of a generalized area on the disk, while a laser pulse heats a localized area thereby fixing the polarity of the smaller area. The localized area with fixed polarity is commonly called a pit. Some encoding systems use the existence or absence of a pit on the disk to define the recorded data as a "1" or "0", respectively. The most commonly used encoding system for this pit-type recording is the run length limited (RLL) 2,7 code because it gives the highest data-to-pit ratio (see for instance EP-A-0 320 975). This type of recording, however, does not lead to higher density because amplitude and timing margins deteriorate very rapidly as frequency is increased.

The invention is specified in the appended claims.

According to a feature of the invention, a method for storing digital data on an optical disk is provided. Binary data words are converted, using a group code recording (GCR) format, to binary code words in which encoded bits have first and second binary values at a given clock interval, the code words having one more bit than the data words. Uniform energizing pulses are selectively generated. The uniform energizing pulses have a duration less than the clock interval during each clock interval in which the encoded bits have one of the binary values. A laser is directed at a recording surface of a rotating optical disk such that the laser beam selectively accesses one of a plurality of concentric tracks on the recording surface. The uniform energizing pulses are applied to the laser to turn the laser beam on and off depending upon the binary value of the encoded bits, thereby recording pits indicative of said encoded bits.

According to another aspect of the invention an apparatus for recording data on an optical data storage disk having a recording surface is provided. A source originates digital data arranged into data words having a given number of bits. A circuit converts, using a group code recording (GCR) format, the data words to code words having one more bit than the given number, the code words comprising a binary signal having first and second binary values at a given clock interval determined by a bit rate of the code words. The apparatus also includes a means for rotatably driving the disk and a laser having a focused laser beam. An optical unit directs the laser at the recording surface such that the laser beam accesses one of a plurality of concentric tracks on the recording surface. A pulse generator produces energizing pulses having a duration less than the clock interval when the binary signal has the first binary values. A laser controller applies the uniform energizing pulses to the laser to turn the laser beam on and off responsive to the energizing pulses such that the laser beam is turned on and off even when the binary signal does not change value from one bit to the next, thereby recording pits indicative of said code words on said optical data storage disk.

In accordance with yet another aspect of the invention, a method is provided for storing data on an optical medium. Using a group code recording (GCR) format, binary data words are converted to binary code words in which encoded bits have first and second binary values at a predefined clock interval. During each clock interval in which said encoded bits have one of said binary values, energizing pulses having uniform duration less than said clock interval are generated. The laser is turned on and off in response to the energizing pulses to magnetically record on the optical medium.

In accordance with another aspect of the invention, an apparatus for storing data on an optical medium is provided. An encoder converts, using a group code recording (GCR) format, binary data words to binary code words in which encoded bits have first and second binary values at a predefined clock interval. A pulse generator generates, during each dock interval in which said encoded bits have one of said binary values, energizing pulses having a uniform duration less than said clock interval. A laser controller turns a laser on and off in response to the energizing pulses to magnetically record on the optical medium.

In accordance with still another aspect of the invention, a method of retrieving digital data recorded on a magneto-optical disk in GCR format is provided, such that a pit on the disk represents a first binary value and an absence of the pit on the disk represents a second binary value. A focused laser is directed at a recorded surface of the disk such that a laser beam selectively accesses one of a plurality of concentric tracks on the recorded surface. One of a first and a second direction of rotation of the laser beam reflected off of the recorded surface is detected. The first direction of rotation represents the first binary value and the second direction of rotation represents the second binary value. A clock signal that defines a clock interval equal to a time duration between bits of data recorded on the disk is generated from the data recorded on the disk. A binary signal that represents the detected direction of rotation during a window substantially equal to the clock interval is generated. The binary signal is arranged into GCR code words that have a fixed number of bits. The code words are converted into data words that have one less bit than the code words.

In accordance with yet another aspect of the invention, an apparatus is provided for reading data on an optical data storage disk on which data in GCR format is magneto-optically recorded in concentric tracks such that a presence of pits on the disk represents a first binary value and an absence of pits on the disk represents a second binary value. The apparatus includes a means for rotatably driving the disk and a laser having a focused laser beam. An optical circuit directs the laser at the disk to selectively access one of the tracks. A detector senses a direction of rotation of the laser beam reflected off of the disk. A signal generator, responsive to the detector, generates a binary signal having the first binary value when the reflected beam is rotated in a first direction and the second binary value when the reflected beam is rotated in a second direction. A processor arranges the binary signal into code words having a fixed number of bits. A converter converts the code words into data words having one less bit than the code words.

### Brief Description of the Drawings

FIG. 1 is a block diagram showing the optical data storage and retrieval system;
FIG. 2 is a series of waveforms showing uniform laser pulsing under a pulsed GCR format and nonuniform laser pulsing under an RLL 2,7 format;
FIG. 3 is a series of waveforms showing laser pulsing for various data patterns adjusted by the write compensation circuit;
FIG. 4 is a schematic diagram showing the write compensation circuit;
FIG. 5 is a series of waveforms showing laser pulsing for amplitude asymmetry correction;
FIG. 6 is a schematic diagram showing the amplitude asymmetry correction circuit;
FIG. 7 is a block diagram showing the basic relationship of elements of the pulse slimming means;
FIG. 8 is a series of waveforms showing threshold adjustments by the dynamic threshold circuit;
FIG. 9 is a schematic diagram for the dynamic threshold circuit; and
FIG. 10 is a schematic block diagram of an optical data storage and retrieval system incorporating downward compatibility.

### Detailed Description of the Specific Embodiments

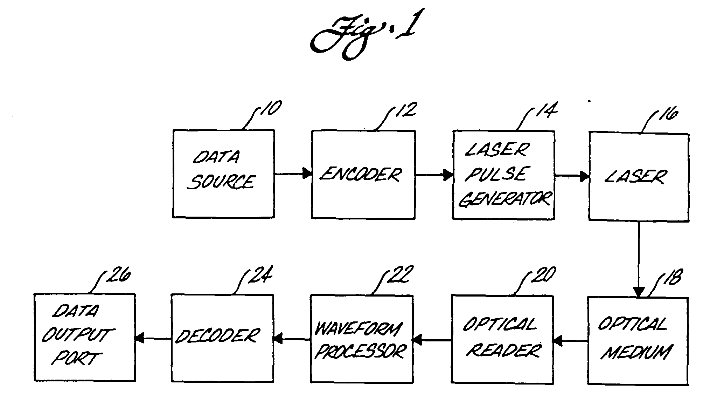

In FIG. 1, during the write mode, a data source 10 transmits data to an encoder 12. The encoder 12 converts the binary data into binary code bits. The code bits are then transmitted to a laser pulse generator 14, where the code bits are converted to energizing pulses for turning a laser 16 on and off. In the preferred embodiment, a code bit "1" indicates that the laser will be pulsed on for a fixed duration independent of the code bit pattern. However, depending on the laser and optical medium being used, performance may be enhanced by adjusting the occurrence of the laser pulse or by extending the otherwise uniform pulse duration. The output of laser 16 heats localized areas of an optical medium 18, which is being exposed to a magnetic flux that sets the polarity of the magnetic material on the optical medium 18. During reads of the optical medium, a laser beam is impinged on the surface of the medium. The polarization of the reflected laser beam will be dependent upon the polarity of the magnetic surface of the optical medium.

During the read mode, the reflected laser beam will be inputted into an optical reader 20, where the read code output will be sent to the waveform processor 22. The processed read code will be sent to a decoder 24, where output data will be transmitted to a data output port 26 for transmission.

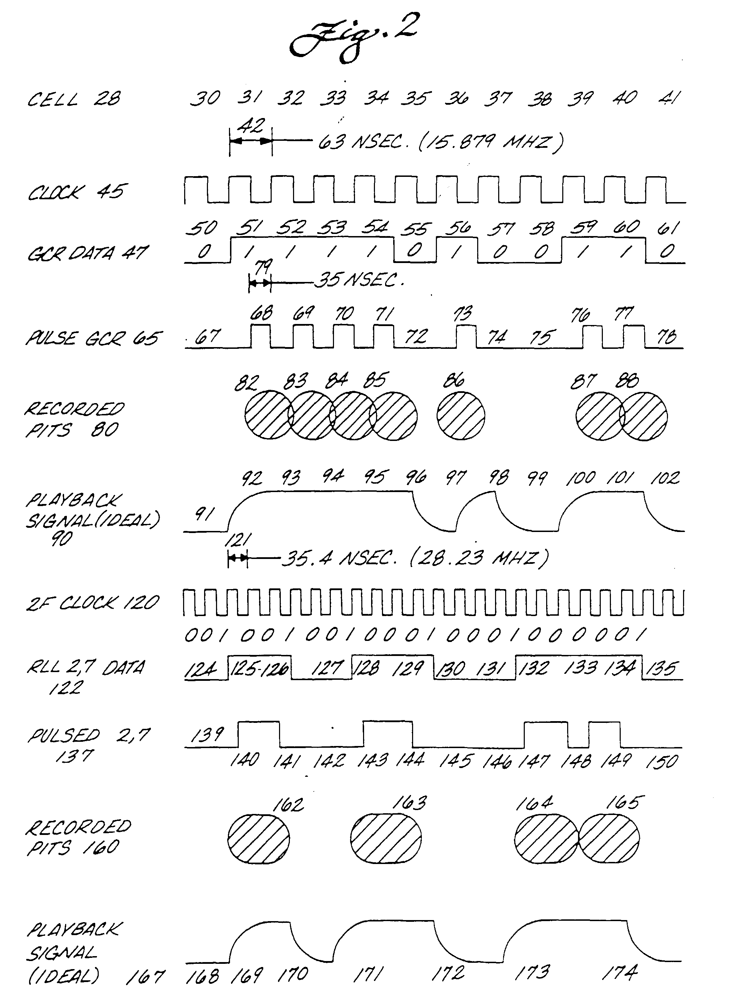

FIG. 2 depicts the differences between the laser pulsing in GCR 8/9 and RLL 2,7 code formats. In GCR 8/9, a cell 28 is defined as a code word corresponding to a data bit. For GCR 8/9, a cell is equal to one data bit. Thus, cells 30 through 41 each correspond to one clock period 42 of clock waveform 45. For a 3½" optical disk rotating at 2,400 revolutions per minute (RPM) with a storage capacity of 256 Mbytes, clock period 42 will typically be 63 nanoseconds or a clock frequency of 15.879 MHz. GCR data waveform 47 is the encoded data output from the encoder 12. A representative data sequence is depicted in FIG. 2. The code data sequence "011110100110" is shown in GCR data 50 through 61, where GCR data 50 is low. GCR data 51 is high. GCR data 52 is high and so forth for GCR data 53 through 61. Pulse GCR waveform 65 is the output from laser pulse means 14 inputted into pulse laser 16. Pulse GCR waveform 65 as shown has not been adjusted in time or duration to reflect performance enhancement for specific data patterns. Pulse GCR 67 through 78 reflect no pulse when the corresponding GCR data 47 is low and reflect a pulse when GCR data 47 is high. For example, pulse GCR 67 has no pulse because GCR data 50 is low. Conversely, pulse GCR 68, 69, 70, and 71 show a laser pulse because GCR data 51 through 54 are each high, respectively, and similarly for pulse GCR 72 through 78. Under the depicted uniform scenario, pulse GCR pulse width 79 is uniform for pulse GCR 68, 69, 70, 71, 73, 76, and 77. For the preferred embodiment, this pulse width is 35 nanoseconds. Each laser pulse corresponding to pulse GCR waveform 65 creates a recorded pit on optical medium 18. Recorded pit 82 corresponds to pulse GCR 68. Recorded pit 83 correspond to pulse GCR 69. Similarly, recorded pits 84 through 88 correspond to pulse GCR 70, 71, 73, 76, and 77, respectively.

Because of thermal dissipation and spot size on the optical medium 18, the recorded pits 80 are wider in time than pulse GCR 65. Successive recorded pits 80 merge together to effectively create a larger recorded pit. Thus, the elongated recorded pit has a leading edge, corresponding to the first recorded pit, and a trailing edge, corresponding to the last recorded pit. For example, the pit created by recorded pits 82 through 85 has a leading edge from recorded pit 82 and a trailing edge from pit 85. Under the GCR 8/9 data format, a leading edge corresponds to GCR data 47 going high, and a trailing edge corresponds to GCR data 47 going low. Hence, for data pattern "10001" as shown by GCR data 51 through 55, a leading edge occurs for the first "1" (GCR data 47 going high) as shown by recorded pit 82; and, at the end of the GCR data 54, a trailing edge occurs as shown by recorded pit 85, because GCR data 55 is low.

Playback signal 90 will be low when recorded pit 80 shows no pits. At the leading edge of a pit, playback signal 90 will rise and remain high until the trailing edge of the pit is reached. The signal will go low and remain low until the next pit. For example, playback signal 91 is low because GCR data 50, which is low, did not create a pit. At the front edge of recorded pit 82, playback signal 90 has a leading edge as shown in playback signal 92. Playback signal 90 will then remain unchanged until a trailing edge occurs on a recorded pit. For example, because recorded pits 83 and 84 show no trailing edge, playback signals 93 and 94 remain high. The signal remains high during playback signal 95 because of recorded pit 85. However, because GCR data 55 is low, recorded pit 85 creates a trailing edge. Thus, playback signal 96 decays. The signal will decay to "0" until a recorded pit occurs creating a leading edge. Thus, with the occurrence of recorded pit 86, which corresponds to GCR data 56 being high, playback signal 97 rises. Because there is no immediate successor to recorded pit 86 when GCR data 57 is low, playback signal 98 decays. Playback signal 99 remains low because there is no recorded pit when GCR data 58 is low. With GCR data 59 and 60 being high, recorded pits 87 and 88 overlap creating one larger pit. Thus, playback signal 100 rises and playback signal 101 remains high. Playback signal 102 falls at the trailing edge of recorded pit 88 when GCR data 61 is low.

For RLL 2,7 a cell consists of two data bits, which corresponds to two clock periods 121 of 2F clock waveform 120. For a 256 Mbyte disk, an RLL 2,7 encoding format will require a 2F clock pulse width 121 of 35.4 nanoseconds or a clock frequency of 28.23 MHz. The calculation of this value is straightforward. In order to maintain the same disk density, the GCR 8/9 and RLL 2,7 encoding formats must contain the same amount of information in the same recording time. Because two code bits are required per data bit in the RLL 2,7 format, it requires a clock frequency approximately twice that of the GCR data format. The GCR data format records nine bits of code bits per eight bits of data. Thus, the GCR data bit clock is nine-eighths of the clock period 42. Thus, for a GCR clock period 42 of 63 nanoseconds, the RLL 2,7 pulse width 121 must be 35.4 nanoseconds in order to maintain the same disk density.

The RLL 2,7 data waveform 122 reflects two code bits per cell. For example, RLL 2,7 data 124 shows a data pattern "00" while RLL 2,7 data 125 shows a data pattern "10". In this data format, a "1" represents a transition in data. Thus, RLL 2,7 data 125 goes high when the "1" occurs in the data pattern. Similarly, RLL 2,7 data 126 goes low when the "1" occurs in the data pattern. While a "0" occurs, RLL 2,7 data 122 remains in the same state. Pulsed 2,7 waveform 137 reflects the pulsing of laser 16 corresponding to RLL 2,7 data 122. Thus, for RLL 2,7 data 125 and 126, during the period when that signal is high, pulsed 2,7 waveform 140 and 141 is high. Because of the thermal elongation of the pit, pulsed 2,7 waveform 141 goes low prior in time to RLL 2,7 data 126. For longer data patterns of "0", the pulsing must remain on. For example, during the data pattern "10001" as shown in RLL 2,7 data 128 and 129, pulsed 2,7 waveform 143 and 144 remains high longer than pulsed 2,7 waveform 140 and 141. For data patterns of successive "0", the pulsed 2,7 waveform 137 can be pulsed as separate pulses. For example, for the data pattern "1000001", RLL 2,7 data 132, 133, and 134 can be pulsed in two separate pulses as shown in pulsed 2,7 147, 148, and 149.

As with the GCR 8/9 format, recorded pits 160 show thermal elongation. For example, recorded pit 162 is wider in time than the pulse from pulsed 2,7 waveform 140 and 141; a similar result may be seen for recorded pit 163. Physical limitations of existing lasers and optical disks prevent recorded pit 163 from being recorded in two successive pulses at 2F clock 120 frequency. Thus, for these intermediate size pits, the thermal accumulation distortion effects will be greater than in either recorded pit 162 or the combined recorded pits 164 and 165. Again, playback signal 167, depicted by playback signal 168 through 174, goes high on leading edges of recorded pits 160, decays on trailing edges of recorded pits 160, and remains constant during the presence or absence of pits.

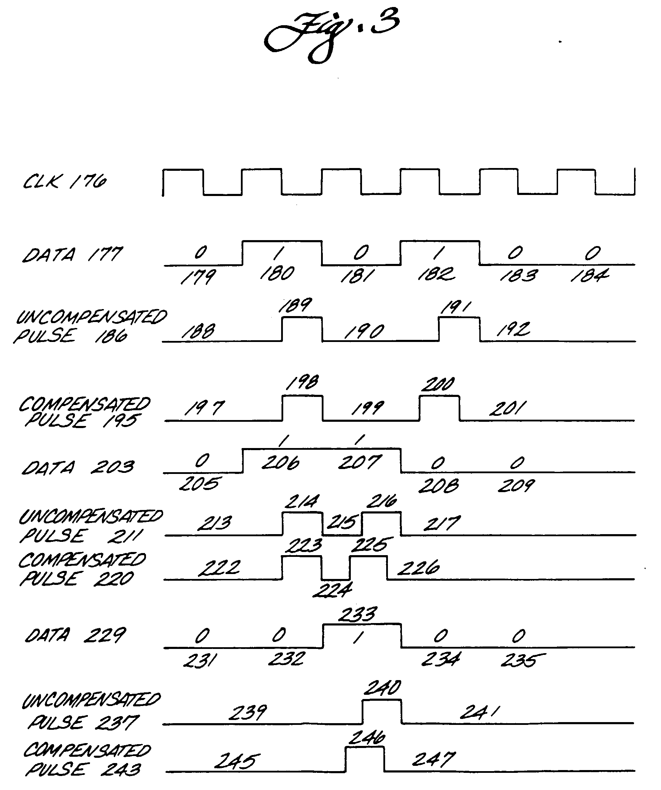

The pulsed GCR code can be improved by correcting predictable position shifts. FIG. 3 shows the timing diagram for the write compensation of the laser pulse generator 14. Experimental testing showed that recording early when the laser 16 is off for two bits or greater enhances performance. Clock waveform 176 is the code bit clock used for clocking data 177, 203, and 229, which show the worst case data patterns for enhancement. Other patterns can be corrected, but will suffer in signal amplitude. Data 180 through 184 correspond to the data sequence "10100". The uncompensated pulse waveforms 188 through 192 correspond to this data pattern without write compensation. Uncompensated pulse waveforms 189 and 191 occur in the second half of the clock period. After write compensation, the output of laser pulse generator 14 corresponds to compensated pulse waveform 195, where compensated pulse waveforms 197 and 198 remain unchanged, and a shortened off-period for compensated pulse waveform 199 provides an earlier compensated pulse waveform 200. During compensated pulse 201, laser 16 remains off for a longer duration than uncompensated pulse 192. Similarly, for data 206 through 209, corresponding to data pattern "1100", uncompensated pulse waveform 211 would be off for uncompensated pulse waveform 213 followed by two pulses, i.e., uncompensated pulse waveforms 214 and 216. Again, the write compensation circuit adjusts compensated pulse waveform 220 so that compensated pulse waveform 225 will occur closer in time to compensated pulse waveform 223 so that compensated pulse waveform 224 is shorter than uncompensated pulse waveform 215. Finally, data 231 through 235, corresponding to the data pattern "00100", have uncompensated pulse waveform 237 occurring at uncompensated pulse waveform 240. Write compensation would move compensated pulse waveform 243 earlier in time to compensated pulse waveform 246.

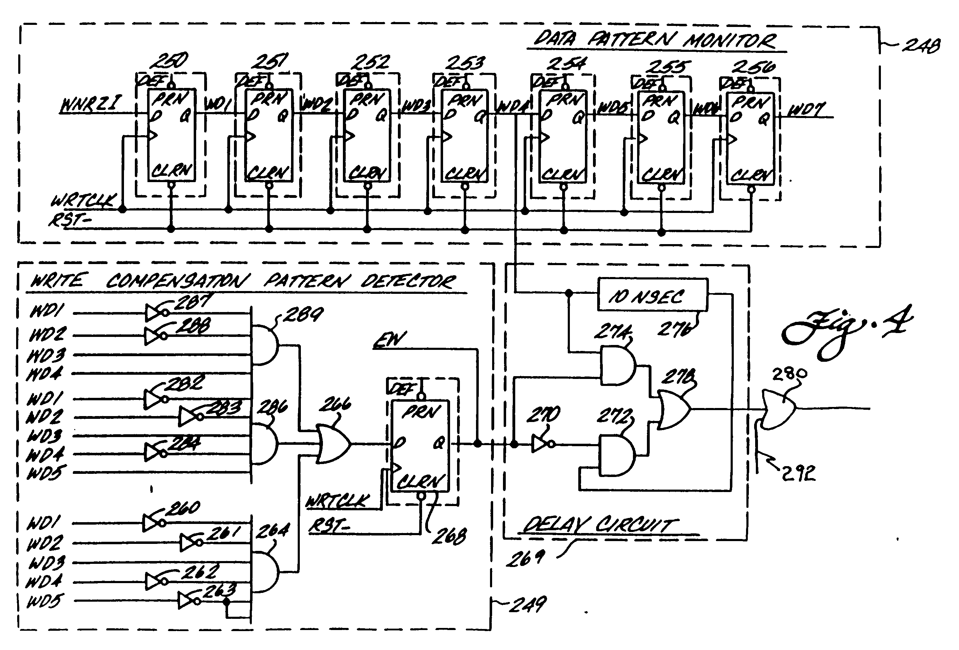

FIG. 4 shows the schematic diagram of the write compensation circuit, which comprises data pattern monitor 248, write compensation pattern detector 249, and delay circuit 269. Data pattern monitor 248 is a serial shift register that sequentially clocks encoded data from encoding means 12. The last five clocked in data bits are sent to write compensation pattern detector 249, where they are analyzed for determining whether to pulse the laser earlier than normal.

Data pattern monitor 248 consists of data sequence D flip-flops 250 through 256. Encoded data is input into the D port of data sequence D flip-flop 250, whose Q output WD1 becomes the input of the D port of data sequence D flip-flop 251. This clocking continues through data sequence D flip-flops 252 through 256, whose Q output WD7 is the data sequence delayed by seven clock periods from when it was first input into data pattern monitor 248. The Q outputs WD1, WD2, WD3, WD4, and WD5 of data sequence D flip-flops 250 through 254, respectively, represent the last five of the last seven data bits inputted into a data pattern monitor 248. These five bits are sent to a write compensation pattern detector 249, where they are compared to predetermined data patterns; and, if they match, an enable write signal is sent to a delay circuit 269 to indicate that the laser pulse is to occur earlier than normal.

The first data pattern is detected by inverting the Q data WD1, WD2, WD4, and WD5 from data sequence D flip-flops 250, 251, 253, and 254, respectively, through data inverters 260, 261, 262, and 263, respectively. The output of these inverters is AND'ed with the output from data sequence D flip-flop 252 in detect AND gate 264. Thus, when a sequence "00100" occurs, the output of detect AND gate 264 goes high, indicating that a detect of the data pattern occurred. Similarly, the second data pattern is detected by inverting the Q outputs WD1, WD2, and WD4 from data sequence D flip-flops 250, 251, and 253, respectively, through the data inverters 282, 283, and 284, respectively, and AND'ing these inverted outputs with the outputs WD3 and WD5 of data sequence D flip-flops 252 and 254 in detect AND gate 286. Thus, a data pattern of "010100" will trigger a high from detect AND gate 286, indicating a detect. The third data sequence is detected by inverting the Q outputs WD1 and WD2 from data sequence D flip-flops 250 and 251, respectively, through data inverters 287 and 288 and AND'ing these inverted outputs with the Q outputs WD3 and WD4 from data sequence D flip-flops 252 and 253, respectively, in data detect AND gate 289. Thus, the data pattern of "1100" will trigger a detect from detect AND gate 289, indicating the presence of the data. The data pattern detect output of detect AND gates 264, 286, and 289 is OR'ed in detected pattern OR gate 266, whose output goes high when one of the three data patterns is detected. The detected pattern output is clocked in enable write D flip-flop 268, whose Q output, the enable write signal, is then sent to delay circuit 269.

Delay circuit 269 takes the clocked data output WD4 of data sequence D flip-flop 253 and simultaneously inputs it into delay circuit 276 and not-delay-select AND gate 274. The delayed output of delay circuit 276 is inputted into delay-select AND gate 272. The enable write signal from write compensation pattern detector 249 will enable either delay-select AND gate 272 or not-delay-select AND gate 274. When the enable write signal is low, which indicates that one of the three data patterns has not occurred, it is inverted by enable write inverter 270. This allows the delayed data from delay circuit 276 to be clocked. On the other hand, if enable write is high, which indicates that one of the three data patterns has occurred, then the not-delay-select AND gate 274 allows the transmission of the data from data sequence D flip-flop 253, which is undelayed. The output from delay-select AND 272 and not-delay-select AND gate 274 is OR'ed in data OR gate 278, where it is outputted from delay circuit 269. Although prior discussions about the write compensation circuit or timing indicated that for the three data patterns, the write pulse would occur 10 nanoseconds earlier, in actual implementation, data is delayed 10 nanoseconds for all data but the three data patterns. The delay of delay circuit 276 is set between 8 to 12 nanoseconds for the frequency of the preferred embodiment.

When recording lower frequency data patterns, the resultant magneto-optical signal has a slower rise time than fall time. This causes the final output from the waveform processor 22 to have degraded amplitude on positive peaks, which can be corrected by recording with higher effective power at the leading edge of the data pattern. For the preferred embodiment, the data pattern "000111" will trigger a wide-write signal during the second "1" of the data pattern, thereby pulsing the laser during its normal off period.

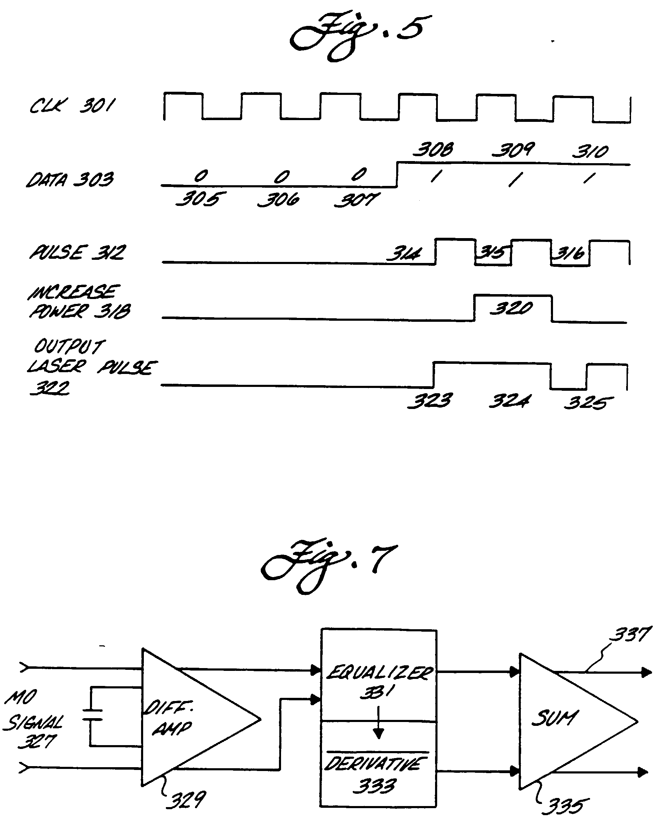

In FIG. 5, clock waveform 301 clocks data waveform 303 through the laser pulse generator 14 for the data pattern "000111". As depicted by data 305 through 310, the laser pulse generator 14 generates pulse waveform 312 with pulses 314, 315, and 316 when data waveform 303 is a "1". During the second "1" of this data pattern, the laser pulse generator 14 will turn on for the increase power waveform 318 and generate a pulse 320. The output laser pulse waveform 322 results from the OR of pulse 312 and turn on for the increase power waveform 318 that creates laser pulses 323, 324, and 325. Under normal operations, laser pulse 324 would be off during the first half of the clock period. However, under this particular data pattern, keeping the laser on for the laser pulses 323 and 324, effectively increases the power fifty percent during this time period.

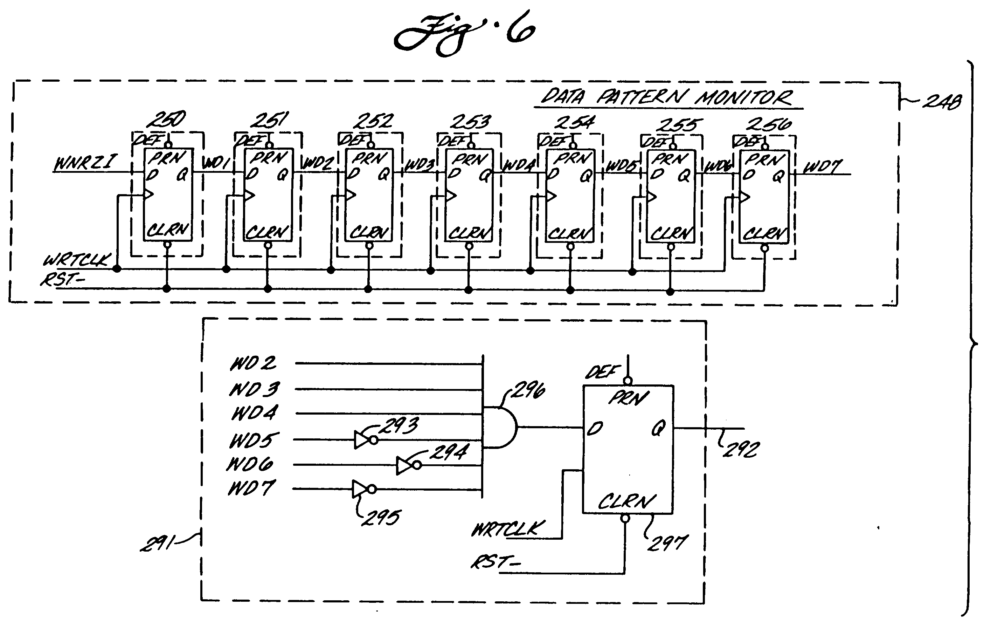

In FIG. 6, amplitude asymmetry correction circuit 291 generates the write-wide pulse 292 (corresponds to increase power waveform 318 in Fig. 5), which will be OR'ed with the laser pulse output from delay circuit 269 (corresponds to pulse waveform 312 in Fig. 5) in laser pulse OR gate 280 (Fig. 4), resulting in output laser pulse waveform 322. The data pattern monitor 248 operates as shown in FIG. 4. The Q outputs WD2, WD3, WD4, WD5, WD6, and WD7 of data sequence D flip-flops 251 through 256, respectively, are inputted into the amplitude asymmetry correction circuit 291, where the outputs WD5, WD6, and WD7 of data sequence D flip-flops 254, 255, and 256, respectively, are inverted in data inverters 293, 294, and 295, respectively. The outputs of data inverters 293, 294, and 295 and data sequence D flip-flops 251, 252, and 253, respectively, are AND'ed in detect AND gate 296. The output of detect AND gate 296 indicates a detected pattern form "000111", which will be clocked out of write-wide D flip-flop 297 at the next clock 301.

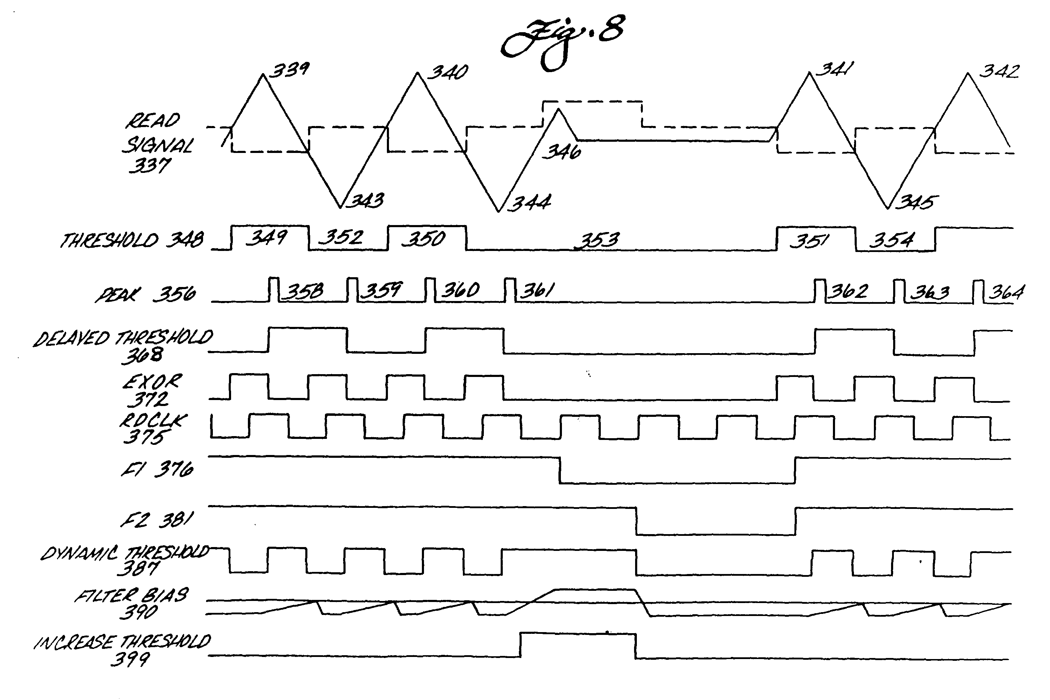

The waveform output of the optical reader 20 will be degraded as a function of frequency and data pattern. Amplitude and timing can be enhanced by processing the signal through the waveform processor 22. The asymmetry of the rise and fall times of an isolated pulse can be improved by summing an equalized, differentiated signal with its derivative. In FIG. 7, magneto-optical signal 327 is differentiated by a differential amplifier 329. The differentiated signal is inputted into an equalizer 331, where it is equalized by 5 dB in the preferred embodiment, and the amplitude is equalized as a function of frequency. The derivative of the equalized signal is taken by a derivative processor 333 and summed with the equalized signal in an adder 335. The output of the adder 335 is the read signal 337.

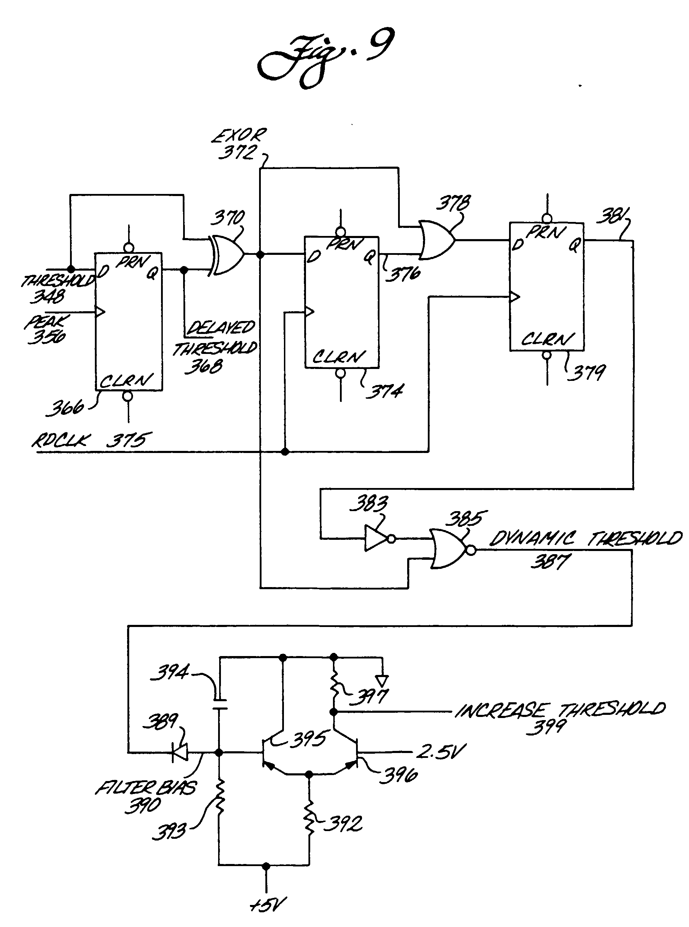

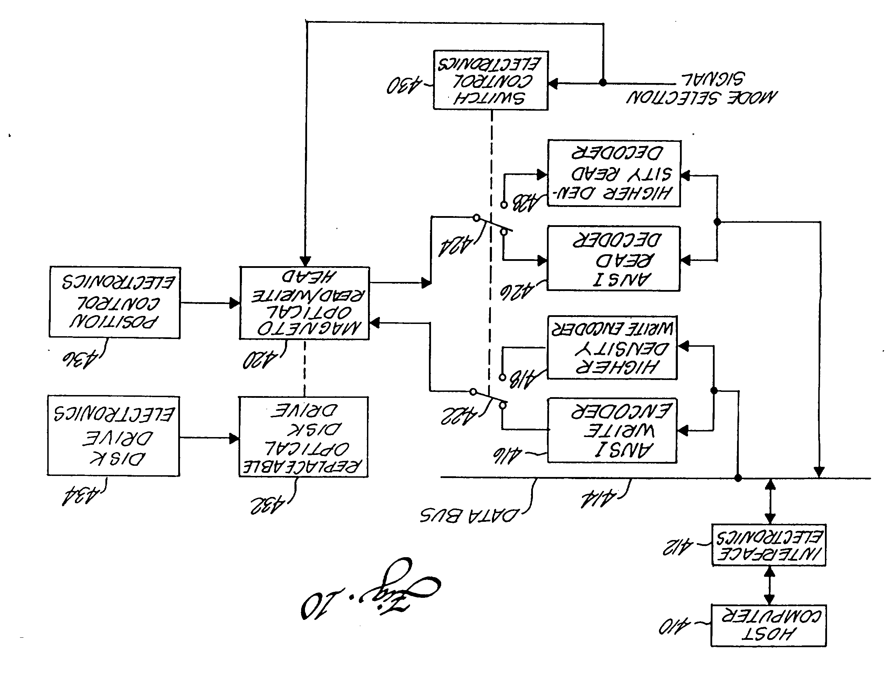

FIG. 8 shows the timing diagram for the dynamic threshold circuit shown in FIG. 9.

Read signal 337 will contain an overshoot produced by the pulse slimming. Because this overshoot is predictable, the threshold for the read circuitry can be increased during the overshoot to prevent false data reads during positive peaks 339, 340, 341, and 342, and during negative peaks 343, 344, and 345 of read signal 337. Threshold waveform 348 is switched high during positive peaks. Threshold waveforms 349, 350, and 351 are high during positive peaks 339, 340, and 341, respectively. Threshold waveforms 352, 353, and 354 are low during negative peaks 343, 344, and 345, respectively. Each peak, whether positive or negative, of the read signal 337 generates peak waveform 356 which is a short clocking pulse that occurs shortly after the read signal 337 peaks. Peaks 339, 343, 340, 344, 341, 345, and 342 of the read signal 337 generate peak waveforms 358 through 364, respectively.

As shown in Fig. 9, threshold waveform 348 is inputted into the D port of threshold delay D flip-flop 366. Peak waveform 356 clocks threshold waveform 348 through this flip-flop. Delayed threshold waveform 368 is the Q output of threshold delay D flip-flop 366, which is exclusively OR'ed with threshold waveform 348 in threshold-exclusive OR gate 370. The EXOR signal 372 is the output of threshold-exclusive OR gate 370. The EXOR signal 372 has twice the frequency of the original threshold waveform 348. The EXOR signal 372 is inputted into the D port of EXOR D flip-flop 374, where it is clocked at read clock 375. F1 waveform 376 is the Q output of EXOR D flip-flop 374. Read clock waveform 375 has a leading edge during high pulses of EXOR signal 372, except when EXOR signal 372 is low for more than one read clock waveform 375. Thus, the F1 waveform 376 is high except for the time between the first read clock 375 pulse after the EXOR signal 372 is low for more than one read clock 375 and the next EXOR signal 372 pulse.

F1 waveform 376 is OR'ed with the EXOR signal 372 in envelope OR gate 378. The output of envelope OR gate 378 is high except for the time from the first read clock 375 after the EXOR signal 372 has been low for more than one clock period until the signal 372 goes high again. The output of envelope OR gate 378 is clocked through the D input of envelope D flip-flop 379, which is clocked by read clock 375. The Q output of the envelope D flip-flop 379 is F2 waveform 381. The F2 waveform 381 is high except from the second read clock 375 period after the EXOR signal 372 goes low until the next read clock 375 clocks a high for the EXOR signal 372. The F2 waveform 381 is inverted through the F2 inverter 383 and NOR'ed with the EXOR signal 372 in dynamic threshold NOR gate 385 to produce the dynamic threshold waveform 387. The dynamic threshold waveform 387 is high any time the EXOR signal 372 is low, except when the F2 waveform 381 is low. Thus, the dynamic threshold waveform 387 has an on-time less than a half read clock 375 period except when the EXOR signal 372 is low on the next read clock 375 period. For this exception, the dynamic threshold waveform 387 stays high from the end of the EXOR signal 372 until the second read clock 375 pulse.

The dynamic threshold waveform 387 is used to forward or reverse bias a biasing diode 389. When dynamic threshold 387 is high, biasing diode 389 is reverse biased. Conversely, when the dynamic threshold waveform 387 is low, the biasing diode 389 is forward biased.

When the dynamic threshold waveform 387 forward biases the biasing diode 389 (i.e., is low), the potential of the filter bias signal 390 is higher by the junction voltage of the biasing diode 389. This potential is 0.6 volts for standard devices. The 5-volt supply voltage drops across the limiting resistor 393 to the potential of the filter bias signal 390, because the voltage across the charging capacitor 394 is the difference between the filter bias signal 390 and ground. The charging capacitor 394 charges up to this potential, which is also the base voltage of a transistor 395. This turns on the transistor 395, causing the voltage drop across a limiting resistor 392 to be almost 5 volts. Because the emitters of the transistors 395 and 396 are connected, the emitter voltage of the transistor 396 is less than the 2.5-volt base voltage of the transistor 396. Accordingly, the transistor 396 is off so that the collector voltage across the collector resistor 397 produces an increase threshold waveform 399 which is low. The increase threshold waveform 399 is the signal that increases the threshold of the read signal 377 detector during periods of overshoot.

When the dynamic threshold waveform 387 is high, the biasing diode 389 is reversed biased, thereby no longer grounding the base of the transistor 395. When the dynamic threshold waveform 387 goes high, the charging capacitor 394 starts charging, creating a potential at the base of the transistor 395 that will rise exponentially up to the supply voltage, 5 volts. As the filter bias signal 390 rises in voltage, the voltage at the emitter of the transistor 395 increases, which equally increases the emitter voltage of the transistor 396. When this emitter voltage exceeds the base voltage by the junction potential across the emitter-to-base junction, the transistor 396 is turned on. Turning on the transistor 396 causes the increase threshold waveform 399 to go high.

Under normal operations, the dynamic threshold waveform 387 is pulsed as described above. During normal read signals, the dynamic threshold 387 is on for a period equivalent to the on-period of read clock 375. The charge time for the voltage across the charging capacitor 394 to exceed the base voltage of 2.5 volts is longer than this half clock period of time. Thus, under normal circumstances, the increase threshold waveform 399 remains low. However, during periods of overshoot, the dynamic threshold waveform 399 is on for a longer period of time, thereby allowing the charging capacitor 394 to charge to a voltage that exceeds 2.5 volts, thereby triggering the increase threshold waveform 399 to go high.

In FIG. 10, a host computer 410, which serves as a source and utilizer of digital data, is coupled by interface electronics 412 to a data bus 414. As host computer 410 processes data, and it wants to access external memory from time to time, a connection is established through interface electronics 412 to data bus 414. Data bus 414 is coupled to the input of a write encoder 416 and the input of a write encoder 418. Preferably, write encoder 416 encodes data from bus 414 in a low-density (i.e., ANSI) format; and write encoder 418 encodes data from data bus 414 in a higher density format. The Draft Proposal for 90 MM Rewritable Optical Disk Cartridges for Information Interchange, dated 1 January 1991, which describes the ANSI format, is incorporated herein by reference. The outputs of write encoders 416 and 418 are coupled alternatively through a switch 422 to the write input of a magneto-optical read/write head 420. The read output of head 420 is coupled alternatively through a switch 424 to the inputs of a read decoder 426 and a read decoder 428. Read decoder 426 decodes data in the same format, i.e., ANSI, as write encoder 416; and read decoder 428 decodes data in the same format as write encoder 418. Preferably, the encoding and decoding technique disclosed above is employed to implement write encoder 418 and read decoder 428. The outputs of decoders 426 and 428 are connected to data bus 414.

Responsive to a mode-selection signal, switch-control electronics 430 set the states of switches 422 and 424 into either a first mode or a second mode. In the first mode, write encoder 418 and read decoder 428 are connected between data bus 414 and read/write head 420. In the second mode, write encoder 416 and read decoder 426 are connected between data bus 414 and read/write head 420. Read/write head 420 reads encoded data from and writes encoded data to a 90 millimeter optical disk received by a replaceable optical disk drive 432, which is controlled by disk-drive electronics 434. Read/write head 420 is transported radially across the surface of the disk received by disk drive 432 by position-control electronics 436.

When a 90 millimeter disk in a high-density format is received by disk drive 432, a mode-selection signal sets the system in the first mode. As a result, data from host computer 410, to be stored on the disk, is organized by interface electronics 412 and encoded by write encoder 418; data read from the disk is decoded by read decoder 428, reorganized by interface electronics 412, and transmitted to host computer 410 for processing.

When a 90 millimeter disk in the low-density ANSI format is received by disk drive 432, a mode-selection signal sets the system in the second mode. As a result, data from host computer 410, to be stored on the disk, is organized by interface electronics 412 and encoded by write encoder 416; data read from the disk is decoded by read decoder 426, reorganized by interface electronics 412, and transmitted to host computer 410 for processing.

In certain cases, it may be desirable to modify the laser for the first and second modes. For example, different laser frequencies could be used or different laser-focussing lens systems could be used for the different modes. In such case, the mode-selection signal is also coupled to read/write head 420 to control the conversion between frequencies or optical-lens focussing systems, as the case may be.

It is preferable to organize the data stored in both formats to have the same number of bytes per sector, i.e., in the case of ANSI, 512 bytes. In such case, the same interface electronics 412 can be used to organize the data stored on and retrieved from the disks in both formats.

In accordance with the invention, the same read/write head 420, position-control electronics 436, optical disk drive 432, disk-drive electronics 434, interface electronics 412, and data bus 414 can be employed to store data on and retrieve data from optical disks in different formats. As a result, downward compatibility from higher-density formats that are being developed as the state of the art advances, to the industry standard ANSI format can be realized using the same equipment.

## Claims

1. A method for storing digital data on an optical disk comprising the steps of:
converting, using a group code recording (GCR) format, binary data words to binary code words in which encoded bits have first and second binary values at a given clock interval, the code words having one more bit than the data words;
selectively generating uniform energizing pulses having a duration less than the clock interval during each clock interval in which the encoded bits have one of the binary values;
directing said laser at a recording surface of a rotating optical disk such that a laser beam selectively accesses one of a plurality of concentric tracks on the recording surface; and
applying the uniform energizing pulses to the laser to turn the laser beam on and off depending upon the binary value of the encoded bits, thereby recording pits indicative of said encoded bits.

2. The method of claim 1 wherein the energizing pulses being such that no substantial thermal accumulation occurs on the optical medium.

3. Apparatus for recording data on an optical data storage disk having a recording surface comprising:
a source (10) of digital data arranged into data words having a given number of bits;
means (12) for converting, using a group code recording (GCR) format, the data words to code words having one more bit than the given number, the code words comprising a binary signal having first and second binary values at a given clock interval determined by a bit rate of the code words;
means for rotatably driving the disk;
a laser (16) having a focused laser beam;
means for directing the laser at the recording surface such that the laser beam accesses one of a plurality of concentric tracks on the recording surface;
means for generating uniform energizing pulses having a duration less than the clock interval when the binary signal has the first binary value; and
means for applying the uniform energizing pulses to the laser to turn the laser beam on and off responsive to the energizing pulses such that the laser beam is turned on and off even when the binary signal does not change value from one bit to the next, thereby recording pits indicative of said code words on said optical data storage disk.

4. The apparatus of claim 3 wherein the converting means forms a binary signal that always changes value within a predetermined multiple of the clock interval.

5. The apparatus of claim 4 wherein the multiple is three.

6. The apparatus of claim 3 wherein the converting means forms a binary signal that follows eight to nine group code recording (GCR).

7. The apparatus of claim 3 wherein the applying means comprises:
means for detecting predetermined sequences of converted data; and
means for advancing the relative timing of selected energizing pulses immediately following one of said predetermined data sequences.

8. The apparatus of claim 7 wherein said predetermined data sequences comprise 1100, 10100, 00100, and 000111.

9. The apparatus of claim 3 wherein the energizing pulses being such that no substantial thermal accumulation occurs on the optical medium.

10. A method for storing data on an optical medium comprising the steps of:
converting, using a group code recording (GCR) format, binary data words to binary code words in which encoded bits have first and second binary values at a predefined clock interval;
generating, during each clock interval in which said encoded bits have one of said binary values, energizing pulses having uniform duration less than said clock interval; and
turning said laser on and off in response to said energizing pulses and magnetically recording on the optical medium thereby.

11. The method of claim 10 wherein the energizing pulses being such that no substantial thermal accumulation occurs on the optical medium.

12. An apparatus for storing data on an optical medium comprising:
an encoder for converting, using a group code recording (GCR) format, binary data words to binary code words in which encoded bits have first and second binary values at a predefined clock interval;
a pulse generator for generating, during each clock interval in which said encoded bits have one of said binary values, energizing pulses having a uniform duration less than said clock interval; and
means for turning a laser on and off in response to said energizing pulses and magnetically recording on the optical medium thereby.

13. The apparatus of claim 12 wherein the energizing pulses being such that no substantial thermal accumulation occurs on the optical medium.

14. A method of retrieving digital data recorded on a magneto-optical disk in GCR format such that a pit on the disk represents a first binary value and an absence of the pit on the disk represents a second binary value, the method comprising the steps of:
directing a focused laser at a recorded surface of the disk such that a laser beam selectively accesses one of a plurality of concentric tracks on the recorded surface;
detecting one of a first and a second direction of rotation of the laser beam reflected off of the recorded surface, the first direction of rotation representing the first binary value and the second direction of rotation representing the second binary value;
generating from the data recorded on the disk a clock signal that defines a clock interval equal to a time duration between bits of data recorded on the disk;
generating a binary signal that represents the detected direction of rotation during a window substantially equal to the clock interval;
arranging the binary signal into GCR code words that have a fixed number of bits; and
converting the code words into data words that have one less bit than the code words.

15. An apparatus for reading data on an optical data storage disk on which data in GCR format is magneto-optically recorded in concentric tracks such that a presence of pits on the disk represents a first binary value and an absence of pits on the disk represents a second binary value, comprising:
means for rotatably driving the disk;
a laser (16) having a focused laser beam;
means for directing the laser at the disk to selectively access one of the tracks;
means for detecting a direction of rotation of the laser beam reflected off of the disk;
means responsive to the detecting means for generating a binary signal having the first binary value when the reflected beam is rotated in a first direction and the second binary value when the reflected beam is rotated in a second direction;
means for arranging the binary signal into code words having a fixed number of bits; and
means (24) for converting the code words into data words having one less bit than the code words.

16. The apparatus of claim 15, in which the converting means forms a binary signal that follows eight to nine group code recording (GCR) decoding.

17. The apparatus of claim 15 wherein detecting means further comprises means for altering the shape of the detected signal.

18. The apparatus of claim 17 wherein altering means further comprises means for narrowing the width and increasing the amplitude of pulses of the detected signal.

19. The apparatus of claim 18 wherein detecting means further comprises means for adjusting the threshold of sensitivity of the detecting means to overshoots in the detected rotation.

## Patentansprüche

1. Verfahren zum Speichern von digitalen Daten auf einer optischen Platte, mit den Schritten:
Konvertieren, unter Verwendung eines gruppencodierten Aufzeichnungsformats (GCR-Formats), von binären Datenwörtern zu binären Codewörtern, in welchen codierte Bits erste und zweite binäre Werte in einem gegebenen Taktintervall aufweisen, wobei die Codewörter ein Bit mehr als die Datenwörter aufweisen;
selektives Erzeugen gleichmäßiger Erregerimpulse mit einer Dauer, die geringer als das Taktintervall ist, während jedem Taktintervall, in dem die codierten Bits einen der binären Werte aufweisen;
Ausrichten des Lasers auf eine Aufzeichnungsoberfläche einer sich drehenden optischen Platte in der Weise, daß ein Laserstrahl selektiv auf eine aus einer Mehrzahl von konzentrischen Spuren auf der Aufzeichnungsoberfläche zugreift; und
Aufbringen der gleichmäßigen Erregerimpulse auf den Laser, um den Laserstrahl in Abhängigkeit vom binären Wert der codierten Bits an- und abzuschalten, und um hierdurch Pits aufzuzeichnen, die indikativ für die codierten Bits sind.

2. Verfahren nach Anspruch 1, wobei die Erregerimpulse der Art sind, daß kein wesentlicher Wärmestau auf dem optischen Medium auftritt.

3. Vorrichtung zur Aufzeichnung von Daten auf einer optischen Datenspeicherplatte mit einer Aufzeichnungsoberfläche, mit:
einer Quelle (10) digitaler Daten, die in Datenwörtern mit einer gegebenen Anzahl an Bits angeordnet sind;
einer Einrichtung (12) zum Konvertieren, unter Verwendung eines gruppencodierten Aufzeichnungsformats (GCR-Formats), der Datenwörter zu Codewörtern mit einem Bit mehr als die vorgegebene Anzahl, wobei die Codewörter ein binäres Signal mit ersten und zweiten binären Werten in einem gegebenen Taktintervall enthalten, das sich durch eine Bitrate der Codewörter bestimmt;
einer Einrichtung zur drehenden Ansteuerung der Platte;
einem Laser (16) mit einem fokussierten Laserstrahl;
einer Einrichtung zum derartigen Ausrichten des Lasers auf die Aufzeichnungsoberfläche, daß der Laserstrahl auf eine aus einer Mehrzahl von konzentrischen Spuren auf der Aufzeichnungsoberfläche zugreift;
einer Einrichtung zum Erzeugen gleichmäßiger Erregerimpulse mit einer Dauer, die geringer als das Taktintervall ist, wenn das binäre Signal den ersten binären Wert aufweist; und
einer Einrichtung zum Aufbringen der gleichmäßigen Erregerimpulse auf den Laser, um den Laserstrahl im Ansprechen auf die Erregerimpulse derart an- und abzuschalten, daß der Laserstrahl auch dann an- und abgeschaltet wird, wenn das binäre Signal seinen Wert von einem Bit zum nächsten nicht ändert, und um hierdurch Pits auf die optische Datenspeicherplatte aufzuzeichnen, die indikativ für die Codewörter sind.

4. Vorrichtung nach Anspruch 3, wobei die Konvertierungseinrichtung ein binäres Signal bildet, welches seinen Wert immer innerhalb eines vorbestimmten Mehrfachen des Taktintervalls ändert.

5. Vorrichtung nach Anspruch 4, wobei das Mehrfache drei ist.

6. Vorrichtung nach Anspruch 3, wobei die Konvertierungseinrichtung ein binäres Signal bildet, welches der acht zu neun gruppencodierten Aufzeichnung (GCR) folgt.

7. Vorrichtung nach Anspruch 3, wobei die Aufbringeinrichtung enthält:
eine Einrichtung zum Erfassen vorbestimmter Sequenzen von konvertierten Daten; und
eine Einrichtung zum Vorziehen des relativen zeitlichen Ablaufs von ausgewählten Erregerimpulsen unmittelbar nachfolgend zu einer der vorbestimmten Datensequenzen.

8. Vorrichtung nach Anspruch 7, wobei die vorbestimmten Datensequenzen 1100, 10100, 00100 und 000111 enthalten.

9. Vorrichtung nach Anspruch 3, wobei die Erregerimpulse derart sind, daß im wesentlichen kein Wärmestau auf dem optischen Medium auftritt.

10. Verfahren zum Speichern von Daten auf einem optischen Medium, mit den Schritten:
Konvertieren, unter Verwendung eines gruppencodierten Aufzeichnungsformats (GCR-Formats), von binären Datenwörtern zu binären Codewörtern, in welchen codierte Bits erste und zweite binäre Werte in einem vorbestimmten Taktintervall aufweisen;
Erzeugen von Erregerimpulsen mit einer gleichmäßigen Dauer, die geringer als das Taktintervall ist, während jedem Taktintervall, in welchem die codierten Bits einen der binären Werte aufweisen; und
An- und Abschalten des Lasers im Ansprechen auf die Erregerimpulse und hierdurch magnetisches Aufzeichnen auf dem optischen Medium.

11. Verfahren nach Anspruch 10, wobei die Erregerimpulse derart sind, daß im wesentlichen kein Wärmestau auf dem optischen Medium auftritt.

12. Vorrichtung zum Speichern von Daten auf einem optischen Medium, mit:
einem Codierer zum Konvertieren, unter Verwendung eines gruppencodierten Aufzeichnungsformats (GCR-Formats), von binären Datenwörtern zu binären Codewörtern, in welchen codierte Bits erste und zweite binäre Werte in einem vorbestimmten Taktintervall aufweisen;
einem Impulsgenerator zum Erzeugen von Erregerimpulsen mit einer gleichmäßigen Dauer, die geringer als das Taktintervall ist, während jedem Taktintervall, in dem die codierten Bits einen der binären Werte aufweisen; und
einer Einrichtung zum An- und Abschalten eines Lasers im Ansprechen auf die Erregerimpulse und zum magnetischen Aufzeichnen auf dem optischen Medium hierdurch.

13. Vorrichtung nach Anspruch 12, wobei die Erregerimpulse derart sind, daß im wesentlichen kein Wärmestau auf dem optischen Medium auftritt.

14. Verfahren zum Zurückgewinnen von digitalen Daten, die auf einer magnetooptischen Platte im GCR-Format derart aufgezeichnet sind, daß ein Pit auf der Platte einen ersten binären Wert und das Fehlen eines Pits auf der Platte einen zweiten binären Wert repräsentiert, wobei das Verfahren die Schritte aufweist:
Ausrichten eines fokussierten Lasers auf eine Aufzeichnungsoberfläche der Platte in der Art, daß ein Laserstrahl selektiv auf eine aus einer Mehrzahl von konzentrischen Spuren auf der Aufzeichnungsoberfläche zugreift;
Erfassen einer ersten oder einer zweiten Drehrichtung des von der Aufzeichnungsoberfläche zurückreflektierten Laserstrahls, wobei die erste Drehrichtung den ersten binären Wert und die zweite Drehrichtung den zweiten binären Wert repräsentiert;
Erzeugen eines Taktsignals von den auf der Platte aufgezeichneten Daten, welches ein Taktintervall definiert, das gleich einer Zeitdauer zwischen auf der Platte aufgezeichneten Datenbits ist;
Erzeugen eines binären Signals, welches die erfaßte Drehrichtung repräsentiert, während eines Fensters, das im wesentlichen gleich dem Taktintervall ist;
Anordnen des binären Signals in GCR-Codewörtern, die eine festgelegte Anzahl an Bits aufweisen; und
Konvertieren der Codewörter in Datenwörter, die ein Bit weniger als die Codewörter aufweisen.

15. Vorrichtung zum Lesen von Daten auf einer optischen Datenspeicherplatte, auf welcher Daten im GCR-Format magneto-optisch in konzentrischen Spuren derart aufgezeichnet sind, daß das Vorhandensein von Pits auf der Platte einen ersten binären Wert und das Fehlen von Pits auf der Platte einen zweiten binären Wert repräsentiert, mit:
einer Einrichtung zur drehenden Ansteuerung der Platte;
einem Laser (16), der einen fokussierten Laserstrahl aufweist;
einer Einrichtung zum Ausrichten des Lasers auf die Platte zum selektiven Zugriff auf eine der Spuren;
einer Einrichtung zum Erfassen einer Drehrichtung des von der Platte zurückreflektierten Laserstrahls;
einer auf die Erfassungseinrichtung ansprechenden Einrichtung zum Erzeugen eines binären Signals mit einem ersten binären Wert, wenn der reflektierte Strahl in einer ersten Richtung gedreht ist, und dem zweiten binären Wert, wenn der reflektierte Strahl in eine zweite Richtung gedreht ist;
einer Einrichtung zum Anordnen des binären Signals in Codewörtern mit einer festgelegten Anzahl von Bits; und
einer Einrichtung (24) zum Konvertieren der Codewörter in Datenwörter mit einem Bit weniger als die Codewörter.

16. Vorrichtung nach Anspruch 15, in welcher die Konvertierungseinrichtung ein binäres Signal bildet, das einer acht zu neun gruppencodierten Aufzeichnungsdecodierung (GCR-Decodierung) folgt.

17. Vorrichtung nach Anspruch 15, wobei die Erfassungseinrichtung ferner eine Einrichtung zum Verändern der Gestalt des erfaßten Signals aufweist.

18. Vorrichtung nach Anspruch 17, wobei die Veränderungseinrichtung ferner eine Einrichtung zum Verengen der Breite und zum Vergrößem der Amplitude von Impulsen des erfaßten Signals aufweist.

19. Vorrichtung nach Anspruch 18, wobei die Erfassungseinrichtung ferner eine Einrichtung zum Justieren der Empfindlichkeitsschwelle der Erfassungseinrichtung auf Überschwingungen in der erfaßten Drehung enthält.

## Revendications

1. Procédé pour mémoriser des données numériques sur un disque optique, comportant les étapes consistant à :
convertir, en utilisant un format d'enregistrement par codage de groupe (GCR), des mots de données binaires en mots de code binaire dans lesquels des bits codés ont une première et une seconde valeur binaire à un intervalle d'horloge donné, les mots de code comportant un bit de plus que les mots de données,
générer, d'une manière sélective, des impulsions d'excitation uniformes ayant une durée inférieure à l'intervalle d'horloge pendant chaque intervalle d'horloge dans lequel les bits codés ont l'une des valeurs binaires,
diriger ledit laser vers une surface d'enregistrement d'un disque optique rotatif de manière à ce qu'un faisceau laser accède d'une manière sélective à une piste parmi une pluralité de pistes concentriques sur la surface d'enregistrement, et
appliquer les impulsions d'excitation uniformes au laser pour laisser passer et bloquer le faisceau laser en fonction de la valeur binaire des bits codés, de manière à enregistrer des micro-cuvettes indicatives desdits bits codés.

2. Procédé selon la revendication 1, dans lequel les impulsions d'excitation sont telles qu'aucune accumulation thermique importante ne se produit sur le support optique.

3. Dispositif pour enregistrer des données sur un disque de mémorisation de données optique ayant une surface d'enregistrement, comportant :
une source (10) de données numériques agencées sous forme de mots de données ayant un nombre de bits donné,
des moyens (12) pour convertir, en utilisant un format d'enregistrement par codage de groupe (GCR), les mots de données en mots de code ayant un bit de plus que le nombre donné, les mots de code comportant un signal binaire ayant une première et une seconde valeur binaire à un intervalle d'horloge donné déterminé par un débit binaire des mots de code,
des moyens pour entraîner de manière rotative le disque,
un laser (16) ayant un faisceau laser focalisé,
des moyens pour diriger le laser vers la surface d'enregistrement de manière à ce que le faisceau laser accède à une piste parmi une pluralité de pistes concentriques sur la surface d'enregistrement,
des moyens pour générer des impulsions d'excitation uniformes ayant une durée inférieure à l'intervalle d'horloge lorsque le signal binaire a la première valeur binaire, et
des moyens pour appliquer les impulsions d'excitation uniformes au laser pour laisser passer et bloquer le faisceau laser sensible aux impulsions d'excitation de manière à laisser passer et bloquer le faisceau laser même lorsque le signal binaire ne change pas de valeur d'un bit à l'autre, ce qui permet d'enregistrer des micro-cuvettes indicatives desdits mots de code sur ledit disque de mémorisation de données optique.

4. Dispositif selon la revendication 3, dans lequel les moyens de conversion forment un signal binaire qui change toujours de valeur à l'intérieur d'un multiple prédéterminé de l'intervalle d'horloge.

5. Dispositif selon la revendication 4, dans lequel le multiple est trois.

6. Dispositif selon la revendication 3, dans lequel les moyens de conversion forment un signal binaire qui suit un enregistrement par codage de groupe (GCR) de format 8/9.

7. Dispositif selon la revendication 3, dans lequel les moyens d'application comportent :
des moyens pour détecter des séquences prédéterminées de données converties, et
des moyens pour faire avancer le cadencement relatif des impulsions d'excitation sélectionnées immédiatement après l'une desdites séquences de données prédéterminées.

8. Dispositif selon la revendication 7, dans lequel lesdites séquences de données prédéterminées comportent 1100, 10100, 00100 et 000111.

9. Dispositif selon la revendication 3, dans lequel les impulsions d'excitation sont telles qu'aucune accumulation thermique importante ne se produit sur le support optique.

10. Procédé pour mémoriser des données sur un support optique comportant les étapes consistant à :
convertir, en utilisant un format d'enregistrement par codage de groupe (GCR), des mots de données binaires en mots de code binaire dans lesquels des bits codés ont une première et une seconde valeur binaire à un intervalle d'horloge prédéfini,
générer, pendant chaque intervalle d'horloge dans lequel lesdits bits codés ont l'une desdites valeurs binaires, des impulsions d'excitation ayant une durée uniforme inférieure audit intervalle d'horloge, et
laisser passer et bloquer ledit laser en réponse auxdites impulsions d'excitation et effectuer ainsi l'enregistrement d'une manière magnétique sur le support optique.

11. Procédé selon la revendication 10, dans lequel les impulsions d'excitation sont telles qu'aucune accumulation thermique importante ne se produit sur le support optique.

12. Dispositif pour mémoriser des données sur un support optique, comportant :
un codeur pour convertir, en utilisant un format d'enregistrement par codage de groupe (GCR), des mots de données binaires en mots de code binaire dans lesquels des bits codés ont une première et une seconde valeur binaire à un intervalle d'horloge prédéfini,
un générateur d'impulsions pour générer, pendant chaque intervalle d'horloge dans lequel lesdits bits codés ont l'une desdites valeurs binaires, des impulsions d'excitation ayant une durée uniforme inférieure audit intervalle d'horloge, et
des moyens pour laisser passer et bloquer un laser en réponse auxdites impulsions d'excitation et effectuer ainsi l'enregistrement d'une manière magnétique sur le support optique.

13. Dispositif selon la revendication 12, dans lequel les impulsions d'excitation sont telles qu'aucune accumulation thermique importante ne se produit sur le support optique.

14. Procédé de recherche de données numériques enregistrées sur un disque magnéto-optique sous le format GCR de telle sorte qu'une micro-cuvette sur le disque représente une première valeur binaire et l'absence de la micro-cuvette sur le disque représente une seconde valeur binaire, le procédé comportant les étapes consistant à :
diriger un laser focalisé vers une surface enregistrée du disque de manière à ce qu'un faisceau laser accède d'une manière sélective à une piste parmi une pluralité de pistes concentriques sur la surface enregistrée,
détecter une direction parmi une première et une seconde direction de rotation du faisceau laser réfléchi par la surface enregistrée, la première direction de rotation représentant la première valeur binaire et la seconde direction de rotation représentant la seconde valeur binaire,
générer à partir des données enregistrées sur le disque un signal d'horloge qui définit un intervalle d'horloge égal à une durée existant entre des bits de données enregistrées sur le disque,
générer un signal binaire qui représente la direction de rotation détectée pendant une fenêtre sensiblement égale à l'intervalle d'horloge,
représenter le signal binaire sous la forme de mots de code GCR comportant un nombre fixe de bits, et
convertir les mots de code en mots de données comportant un bit de moins que les mots de code.

15. Dispositif pour lire des données sur un disque de mémorisation de données optique sur lequel des données sous le format GCR sont enregistrées d'une manière magnéto-optique dans des pistes concentriques de manière à ce qu'une présence de micro-cuvettes sur le disque représente un première valeur binaire et une absence de micro-cuvettes sur le disque représente une seconde valeur binaire, comportant :
des moyens pour entraîner de manière rotative le disque,
un laser (16) ayant un faisceau laser focalisé,
des moyens pour diriger le laser vers le disque pour accéder d'une manière sélective à l'une des pistes,
des moyens pour détecter une direction de rotation du faisceau laser réfléchi par le disque,
des moyens sensibles aux moyens de détection pour générer un signal binaire ayant la première valeur binaire lorsque le faisceau réfléchi tourne dans une première direction et ayant la seconde valeur binaire lorsque le faisceau réfléchi tourne dans une seconde direction,
des moyens pour représenter le signal binaire sous la forme de mots de code comportant un nombre fixe de bits, et
des moyens (24) pour convertir les mots de code en mots de données comportant un bit de moins que les mots de code.

16. Dispositif selon la revendication 15, dans lequel les moyens de conversion forment un signal binaire qui suit un décodage d'enregistrement par codage de groupe (GCR) de format 8/9.

17. Dispositif selon la revendication 15, dans lequel les moyens de détection comportent en outre des moyens pour modifier la forme du signal détecté.

18. Dispositif selon la revendication 17, dans lequel les moyens de modification comportent en outre des moyens pour rétrécir la largeur et augmenter l'amplitude des impulsions du signal détecté.

19. Dispositif selon la revendication 18, dans lequel les moyens de détection comportent en outre des moyens pour ajuster le seuil de sensibilité des moyens de détection à des dépassements de la rotation détectée.
